# EUROPEAN PATENT SPECIFICATION

(11) **EP 2 465 709 B1**
(45) Date of publication and mention of the grant of the patent: **23.11.2016**
(21) Application number: 11192601.0
(22) Date of filing: 08.12.2011
(51) Int. Cl.: B60C 11/12, B29D 30/06

(54) **Vehicle tire and tire tread band**
Reifenlaufläche
Bande de roulement

(30) Priority: 15.12.2010 FI 20106326
(43) Date of publication of application: 20.06.2012
(73) Proprietor: Nokian Renkaat Oyj, 37101 Nokia (FI)
(72) Inventor: Jokinen, Mikko, 33580 Tampere (FI)
(74) Representative: Tampereen Patenttitoimisto Oy

(56) References cited:
- WO-A1-99/48707
- JP-A- 10 080 923
- US-A1- 2010 078 107

## Description

The invention relates to a vehicle tire including a tread layer designed for a rolling contact against a ground surface, in which tread layer there is formed a tread pattern comprising circumferential and transversal grooves, so that in between the grooves, there are formed tread blocks provided with sipes.

The invention also relates to a tread band for treading a vehicle tire, said tread band including a tread layer designed for a rolling contact against a ground surface, in which tread layer there is formed a tread pattern comprising circumferential and transversal grooves, so that in between the grooves, there are formed tread blocks provided with sipes.

The invention further relates to a lamella plate used in the production of a vehicle tire according to claim 1, by means of which lamella plate a sipe is formed in the tread block.

The invention relates to a vehicle tire including a tread layer designed for a rolling contact against a ground surface, said tread layer being provided with a tread pattern comprising circumferential and transversal grooves for removing water from the contact area between the ground surface and the tire, as well as lamellas formed by means of sipes in the tread blocks placed in between the grooves for improving the grip between the ground surface and the tire. The invention also relates to a corresponding tread band that can be treaded on the tire casing. Further, the invention also relates to a tool for manufacturing said vehicle tire or tread band.

A vehicle tire includes a tread layer, the purpose of which is to make a rolling contact with a ground surface, such as a road. The tread layer is provided with a tread pattern, so that by means of divergent grooves, there are formed tread blocks in the tread layer, i.e. the tread layer comprises tread blocks and grooves. The purpose of the grooves is to make water that is possibly located on the ground surface flow, so that the contact between the outer tread layer surface and the road, more precisely between the tread block and the road, is as good and consistent as possible. With certain tire types, such as winter tires, the tread blocks are by means of sipes provided with adjacent lamellas that bring forth a better grip between the tire and the road. The present invention particularly relates to this kind of tire type provided with lamellas formed by means of sipes.

A positive feature achieved by sipes and lamellas created thereby is that they reduce the contact between the tread layer and the ground surface with low-friction surfaces, such as snow and ice, thus improving positive-locking friction between the ground surface and the tread block, as well as increasing hysteresis friction of the outermost layer of the tread layer, i.e. of the so-called surface rubber, in a slipping situation. On ice, the slipping of a tire generally creates a thin aqueous film between the tire and the ground surface owing to friction heat. This created aqueous film is also reduced by escaping in the sipes, which further improves the contact and friction between the tread block and ice.

A drawback with lamellating and sipes is that on high-friction surfaces, such as dry or wet asphalt, the stability of the tread block is reduced, which also reduces the tire performance as regards braking, acceleration and handling properties. As an example of a situation where a tire can be considered to have lost its stability, let us mention a remarkable buckling of a tread block when swerving, in which case the tread block in a way falls under the tire. Generally this kind of a situation is unpleasant for the driver and anticipates that the vehicle is about to start slipping. In connection with the specification of the present invention, we use the terms low-friction ground surface and high-friction ground surface to describe the friction properties between the outer surface of the tread layer of a vehicle tire and the ground surface. Low-friction ground surfaces are for example surfaces covered with ice and snow, whereas high-friction surfaces are for example dry or wet asphalt.

From the prior art, there is known, among others, the publication US 3,608,602, which introduces a rotation symmetrical shape formed in a slot.

From the prior art, there is also known the publication EP 1533141 B1 introducing a polyhedron-shaped locking element formed in a sipe.

From the prior art, there is also known the publication WO99/48707A1. It discloses a tire tread having elastomeric material, the tread having a plurality of grooves defining ground engaging elastomeric elements, the tread characterized by at least one of the elements including a sipe, the sipe extending from the ground engaging elements, the sipe having a first surface area and an opposite facing second surface area, each surface area has a plurality of recesses or protrusions, each recess has a centroid aligned with a centroid of a protrusion, each protrusion extends from the first or second surface area to interlock with a recess, each protrusion or recess having at least one radially inner end above the depth of the sipe or radially outer end located below the radially outer surface of the ground engaging element.

JP10080923, corresponding with the features of the preamble of claims 1, 7 and 8, discloses a tyre with improved running performance on an ice and snow road or wet road while preventing irregular wear. Therein, the tyre is provided with sipe groove that, at the time of running on an ice and snow or wet road, tend to be bloeked, but since sidewalls of protrusions of one and the other sides bent and protruded in a ridge state are brought into contaet with one another to be supported to one another, blocking is suppressed. As a result lateral rigidities beeome substantially uniform at a sectional area to suppress occurrence of irregular wear.

The object of the invention is to improve the properties of a vehicle tire provided with lamellas and sipes in the tread block, so that the stability of the tread block is increased, but the tread block still remains "soft" against a low-friction ground surface.

Moreover, it is an object of the invention to produce a vehicle tire having said properties as economically as possible, so that a vehicle tire with top-class properties is achieved with as low production expenses as possible.

In connection with the specification of the present invention, the term "groove" refers to an elongate, open space formed in the tread. A groove differs from a sipe in that in a groove, the opposite side walls are not meant to be in mutual contact in a drive situation, for example during changes in speed or direction. Respectively, a "sipe" refers to an element formed in the tread where the opposite side walls of the sipe are meant to be in mutual contact in a driving situation, during changes in speed or direction. Respectively, the term "tread pattern" refers to a pattern made in the tread layer, which pattern is formed of the geometry of the grooves and of the tread blocks left in between the grooves, and further of the sipes. In connection with the specification of the present invention, the term "circumferential groove" refers to a groove that proceeds mainly in the rolling direction of the tire, i.e. in a plane that is perpendicular (90°) to the rotary axis. One embodiment is a circumferential groove that is often called a circular groove. By means of two such circular grooves, a circumferential rib can be formed in the tread layer. However, in this connection the term "circumferential groove" can also be used of a groove that proceeds mainly in the rolling direction and makes a self-restoring zigzag pattern, so that the trail following the groove returns to the starting point, in case the tire has been rotated for a full cycle around its rotary axis. The term "transversal groove" in connection with the present application refers to a groove that proceeds in the transversal direction of the tire, i.e. at an angle α ≤ 45° with respect to the axial direction of the tire. The term "diagonal groove" in connection with the present application refers to a groove that proceeds at an angle α ≤ 45° with respect to the transversal direction of the tire, i.e. the axial direction of the tire. A tire often includes grooves with different diameters, and in connection with the specification of the present invention, the largest grooves can be called "main flow grooves". A similar terminology referring to the directions is also used with the sipes and other corresponding elements. In connection with the present specification, the direction in depth refers to a direction that is oriented from the outer surface of the tread layer radially towards the rotary axis of the tire.

A vehicle tire according to the invention is characterized in that at least part of the sipes is formed to be undulating in the lengthwise direction of the sipe, so that at least two main surfaces that are spaced apart are sequentially formed in the sipe, and that in between these surfaces, there is a transfer zone, in which case the adjacent main surfaces are provided with locking elements, which at the other sipe wall are formed as a bracket having the shape of a rotation symmetrical truncated cone, and at the other sipe wall as a rotation symmetrical frusto-conical recess, so that said bracket and recess are matched together, when the sipe walls are pressed together in a usage situation.

A vehicle tire tread band according to the invention is characterized in that at least part of the sipes is formed to be undulating in the lengthwise direction of the sipe, so that at least two main surfaces that are spaced apart are sequentially formed in the sipe, and that in between these surfaces, there is a transfer zone, in which case the adjacent main surfaces are provided with locking elements, which at the other sipe wall are formed as a bracket having the shape of a rotation symmetrical truncated cone, and at the other sipe wall as a rotation symmetrical frusto-conical recess, so that said bracket and recess are matched together, when the sipe walls are pressed together in a usage situation.

A lamella plate used in the production of a vehicle tire according to the invention in turn is characterized in that the lamella plate is formed to be undulating in the lengthwise direction of the lamella plate, so that at least two main surfaces that are spaced apart are sequentially formed in the lamella plate, and that in between these surfaces, there is a transfer zone, in which case the adjacent main surfaces are provided with locking elements that form a bracket having the shape of a rotation symmetrical truncated cone at the other wall of the created sipe, and a rotation symmetrical frusto-conical recess at the other sipe wall, so that said bracket and recess are matched together, when the sipe walls are pressed together in a usage situation.

By means of the invention, the conventional lamellated arrangement can be improved by increasing the stability of the tread block, without, however, loosing the required softness and resilience. This is carried out in the described fashion, by locking the lamellation in the depth direction in a form-locking fashion by making use of the undulating form of the rotation symmetrical frusto-conical recesses and the transversally proceeding sipe. The frusto-conical locking element also has a locking effect in the lengthwise direction of the sipe. When the friction between the tread and the ground surface is low, a soft contact of the tread block with the ground surface can be maintained by allowing a movement of the lamellas up to a given threshold value. When said threshold value is surpassed, the lamellation is locked in the described form-locking fashion, partly by means of the rotation symmetrical frusto-conical recesses and corresponding brackets, and partly by means of the undulation of the transversal sipe. Now with low-friction ground surfaces, the tread block behaves like the "soft" lamellated tread block of the prior art, but as the ground surface friction grows and the forces affecting the tread block are increased, the stability of the tread block is improved, i.e. the tread block is made more rigid by means of the form-locking feature, which improves the tire performance on a high-friction ground surface. The above mentioned threshold value is partly defined on the basis of material parameters, partly on the basis of the sipe width, i.e. in practice on the basis of the width of the employed lamella plate. In a driving situation, the forces affecting the tire result in a deformation of the tread block, and as a consequence, the sipe is closed. When the sipe walls slide against each other, the frusto-conical shape begins to resist the movement, as the shift surpasses the length caused by the thickness of the lamella plate.

In performed experiments, a frusto-conical locking element has been found to be a very feasible solution, particularly when it is formed in a sipe undulating in the way described in the present invention. The frusto-conical shape resists a possible transversal deformation of the sipe in an optimal fashion. Often the sipe is made in the tire transversally, in which case it tends to be deformed particularly when braking or accelerating. Likewise, the frusto-conical shape also functions in the lengthwise direction of the sipe, particularly if the direction of the forces causing deformation is such that the locking achieved by the undulating shape of the sipe tends to open.

According to an embodiment of the invention, the locking elements are on adjacent main surfaces placed in mutually opposite directions, and they are formed on the main surfaces as oriented away from the center surface of the sipe. Thus the geometrical locking effect in the direction of the sipe is highest, when the distance from the imaginary center surface of the sipe is as long as possible. In certain motional situations, the tread block tends to be deformed, so that the sipe walls tend to slide with respect to each other in the lengthwise sipe direction, and said feature particularly resists the longitudinal deformation of the sipe.

The invention is described in more detail below, with reference to the appended drawings, where:
Figure 1 shows a general view of a vehicle tire,
Figure 2 shows a detail of the vehicle tire illustrated in Figure 1,
Figure 3 illustrates a surface pattern of a vehicle tire,
Figure 4 shows a section of the surface pattern illustrated in Figure 3,
Figures 5A, 5B and 5C illustrate the lamella plate according to the invention as viewed from different directions,
Figures 6A and 6B illustrate a tread block in different usage situations,
Figure 7 illustrates lamella plates according to an embodiment, and
Figure 8 illustrates further embodiments of lamella plates.

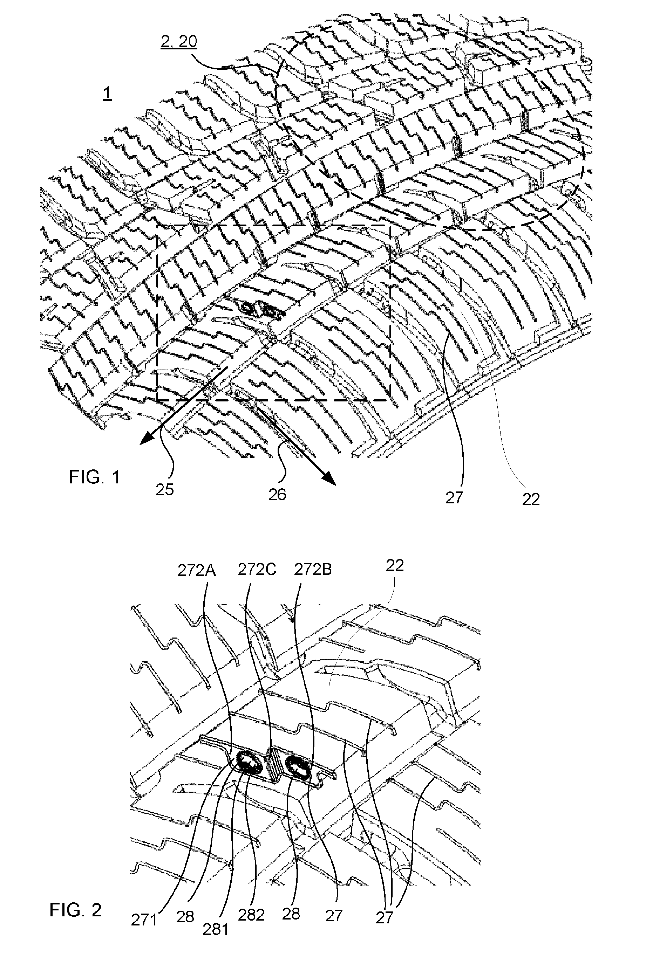

Figure 1 illustrates a vehicle tire 1 including a tread layer 2, designed for a rolling contact against a ground surface, said tread layer 2 being provided with a tread pattern 20 comprising circumferential grooves 25 and transversal grooves 26, so that in between the grooves 25, 26, there are created tread blocks 22 provided with sipes 27, and at least part of the sipes 27 are formed to be undulating in the lengthwise direction of the sipe 27.

Figure 2 shows an enlarged illustration of the area defined by dotted lines in Figure 1. For the sake of illustrative clarity, one single sipe 27 is illustrated in Figure 2, so that the shape of the sipe 27 is evident from the drawing. The sipe 27 is formed to be undulating in the lengthwise direction of the sipe 27, so that at least two main surfaces 272A, 272B that are spaced apart (here in the circumferential direction) are sequentially formed in the sipe 27, and that in between these surfaces, there is a transfer zone 272C, in which case the adjacent main surfaces 272A, 272B are provided with locking elements 28, which at the other sipe wall 271 are formed as a bracket 281 having the form of a rotation symmetrical truncated cone, and at the other sipe wall 271 as a rotation symmetrical frusto-conical recess 282, so that said bracket 281 and recess 282 are matched together, when the sipe walls 271 are pressed together in a usage situation.

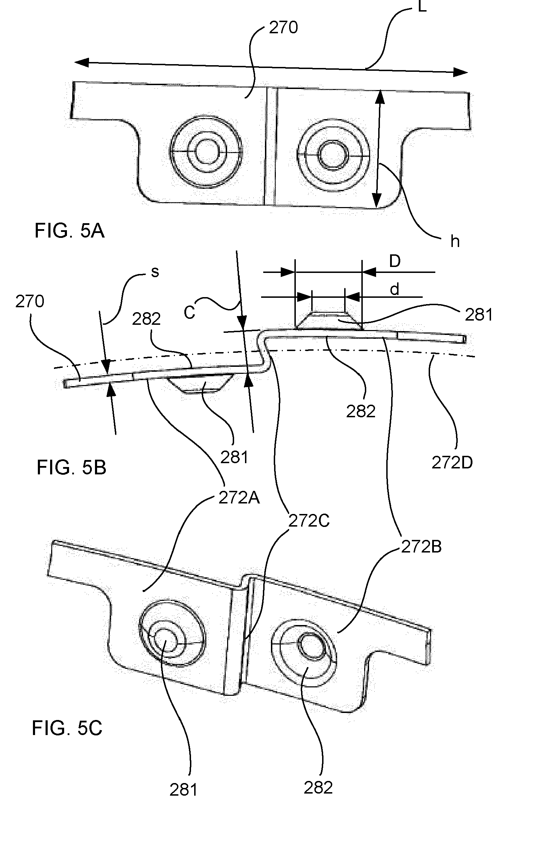

The locking elements 28 according to Figure 2 are on adjacent main surfaces 272A, 272B placed in mutually opposite directions, and they are formed on the main plane surface 272A, 272B so that they are directed away from the center surface 272D of the sipe 27 (cf. Figure 5 B). According to another embodiment of the invention, the recess 28 is formed on the main plane surface 272A, 272B, towards the center plane C of the sipe 27. This embodiment is not illustrated in the drawings.

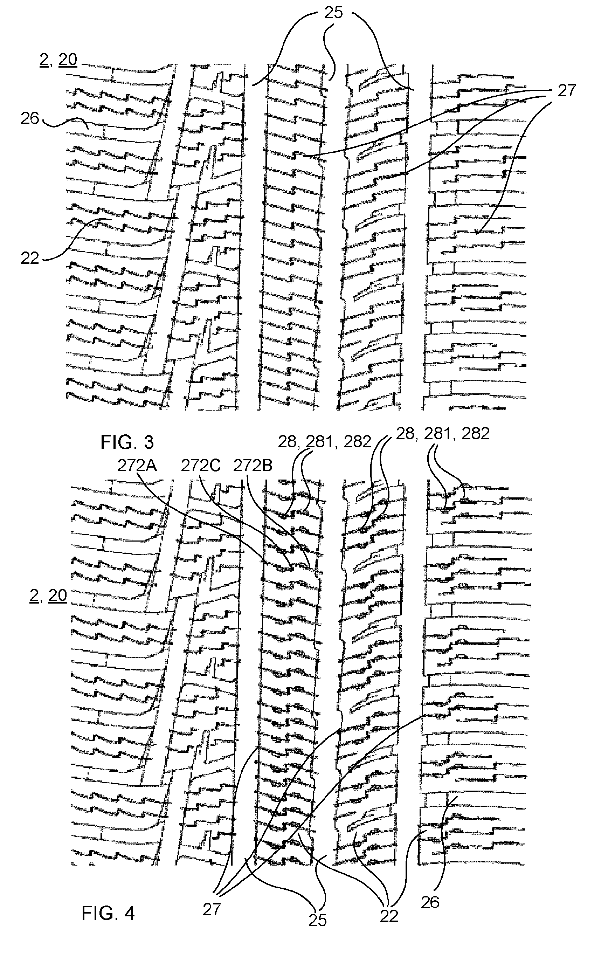

Figure 3 illustrates an embodiment of the vehicle tire tread pattern 20. Figure 3 shows circumferential grooves 25 (vertical direction in the drawing), transversal grooves 26 (horizontal direction in the drawing) and tread blocks 22 formed therebetween and provided with sipes 27.

Figure 4 illustrates an embodiment of a vehicle tire according to Figure 3, viewed so that the locking elements 28 are visible. The vehicle tire according to said embodiment includes a tread layer 2, designed for a rolling contact against a ground surface, said tread layer 2 being provided with a tread pattern 20 comprising circumferential grooves 25 and transversal grooves 26, so that in between the grooves 25 there are created tread blocks 22 provided with sipes 27. At least part of the sipes 27 is formed to be undulating in the lengthwise direction of the sipe 27, so that at least two main surfaces 272A, 272B that are spaced apart by a distance C are sequentially formed in the sipe 27, and that in between these surfaces, there is a transfer zone 272C, in which case the adjacent main surfaces 272A, 272B are provided with locking elements 28, which at the other wall 271 of the sipe 27 are formed as a bracket 281 having the form of a rotation symmetrical truncated cone, and at the other sipe wall 271 as a rotation symmetrical frusto-conical recess 282, so that said bracket 281 and recess 282 are matched together, when the sipe walls 271 are pressed together in a usage situation. In the embodiment illustrated in Figure 4, the vehicle tire is designed to be installed in the vehicle in an aligned fashion, so that in Figure 4, the right edge is meant to be outwards, i.e. it corresponds to the outer edge of the vehicle. Now, as the vehicle swerves, the strongest forces are directed to the tread blocks 22 that are located on the side of the outer edge of the tire (i.e. here on the right-hand side). According to the invention, for these blocks that are located on the outer edge side, there are achieved the desired controlled properties, i.e. sufficient softness with low lateral forces, but as the force is increased, the movement between the lamellas is prevented, or it is attempted to be reduced as the locking elements 28 start to function, thus restricting the motion between the lamellas. In the embodiment illustrated in Figure 4, it is shown that the locking elements 28 are arranged in three outermost rows or zones defined by the circumferential groove 25, but this is by no means the only possible embodiment; on the contrary, the locking elements can be placed in many different ways, in one outermost row, in two, three or four rows or in every row, or only in the innermost or centermost row, or in several center rows, etc.

Figures 5A, 5B and 5C illustrate a lamella plate 270 according to an embodiment of the invention, which lamella plate is used as a tool when manufacturing a vehicle tire according to the invention. As a mold piece having a positive volume, the lamella plate 270 creates in the tire an empty space, i.e. sipe 27, corresponding to its shape. The lamella plate 270 can be made for instance of steel plate by cutting it in the shape illustrated in Figure 5A, 5B and 5C.

Figure 5A illustrates the lamella plate 270 as viewed at the front. In case the sipe 27 made by means of the lamella plate 270 is located transversally in the tire, the direction "viewed at the front" means the same as the circumferential direction of the tire. The lamella plate 270 has a height h that defines the corresponding sipe depth in the tire tread. As can be seen in the drawings, the lamella plate does not have an equal height h along the whole length L, but the height h is advantageously lower at the edge regions. In that case the width of the tread block or the sipe length do not have a sipe with a constant depth, but the edge regions can be made, by applying this kind of design, for example stronger, less resilient or more durable. The depth h of the sipe 27 formed by means of a lamella plate 270 is at highest at the main planes 272A, 272B. In Figure 5A, the top edge corresponds to the outer surface of the tire.

In Figure 5B, the lamella plate is illustrated as viewed from the top, so that the direction in the tire corresponds to the radial direction, for instance as viewed at right angles to the tire tread. From Figure 5B it can be observed that the lamella plate 270 has a thickness s that accordingly corresponds to the width of the sipe 27. The lamella plate 270 is made to be undulating in the lengthwise direction, so that in the lamella plate 270, there are formed sequentially at least two main surfaces 272A, 272B that are spaced apart by the distance C, and between said surfaces, there is a transfer zone 272C, in which case the adjacent main surfaces 272A, 272B are provided with a rotation symmetrical frusto-conical bracket 281, and on the other side of the lamella plate, there is formed a recess 282. As a mold piece having a positive volume, the lamella plate 270 now creates in the tire a corresponding empty space, i.e. the sipe 27. Now the bracket 281 of the lamella plate 270 forms a recess 282 in the sipe wall, and the recess 282 of the lamella plate 270 forms a bracket 281 in the sipe wall. According to an embodiment, the distance C between the main surfaces 272A, 272B is 1 - 5 mm. Further, according to a preferred embodiment the base diameter D of the truncated cone forming the recess 281 is 3 - 7 mm, and the tip diameter d is 1 - 7 mm, however so that the tip diameter d is at least 10% smaller than the base diameter D. The width L of the lamella plate is perpendicular to the distance C.

For the sake of illustrative clarity, Figure 5C also shows the lamella plate 270 illustrated in Figures 5A and 5B as viewed from another direction, so that the three-dimensional quality of the lamella plate 270 is even more clearly visible.

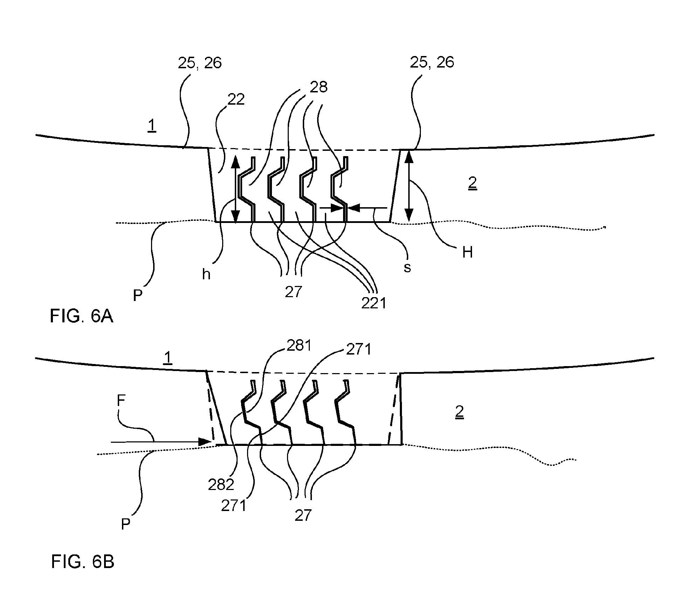

Figures 6A and 6B illustrate how a tread block 22 is deformed as the shearing force F between the tire 1 and the ground surface P increases. This kind of shearing force F can be created for example when accelerating or braking the vehicle, or by the centrifugal force while swerving. For the sake of illustrative clarity, Figures 6A and 6B illustrate in the tread layer 2 only one tread block 22 including four sipes 27, in between which the lamellas 221 are formed. Figures 6A and 6B illustrate a cross-section of a sipe at a point where the locking element 28 is visible in cross-section. Figure 6A illustrates a situation where the tread block 22 is not affected by a shearing force F, or where it is affected by a relatively low force that is transversal to the sipe 27. Now the width s of the sipes 27 remains unchanged, or nearly unchanged. The depth of the tread block 22 is defined by the depth H of the groove 25, 26. The depth h of the sipes 27 in turn defines the height of the lamella 221 formed in between the sipes.

Figure 6B illustrates how the tread block 22 of Figure 6A is deformed, when the shearing force F between the ground surface P and the tire 1 has increased, for example up to the determined threshold value. Now the sipes 27 are closed owing to the deformation of the tread block 22, in which case the sipe width is approximately zero, particularly in the vicinity of the contact point of the ground surface P and the tread block 22. Owing to the deformation, the sipe walls 271 have slid against each other in the direction of the depth of the sipe 27, until the bracket 281 of the locking element 28 and the recess 282 touch and begin to obstruct or prevent deformation. Said threshold value at which the bracket 281 and the recess 282 touch can be designed to be as desired, by adjusting the various parameters affecting it, among them the material properties of the tire, the depth h of the sipe 27, the width is of the sipe, the distance between sipes etc. By utilizing the sipe width s, i.e. the thickness of the lamella plate used in the manufacturing process, it is particularly possible to define the desired "softness", i.e. the allowed degree of deformation, before the locking element 28 begins to prevent deformation. In performed experiments, a frusto-conical locking element 28 has been found to be a very feasible solution, particularly when it is formed in a sipe undulating in the way described in the present invention. A frusto-conical shape suitably obstructs a possible transversal deformation of the sipe, and it is equally functional in various different motional situations, for instance when directly braking or accelerating, or when performing these motions during a swerve. Often the sipe is made in the tire transversally, in which case it tends to be easily deformed particularly when braking or accelerating.

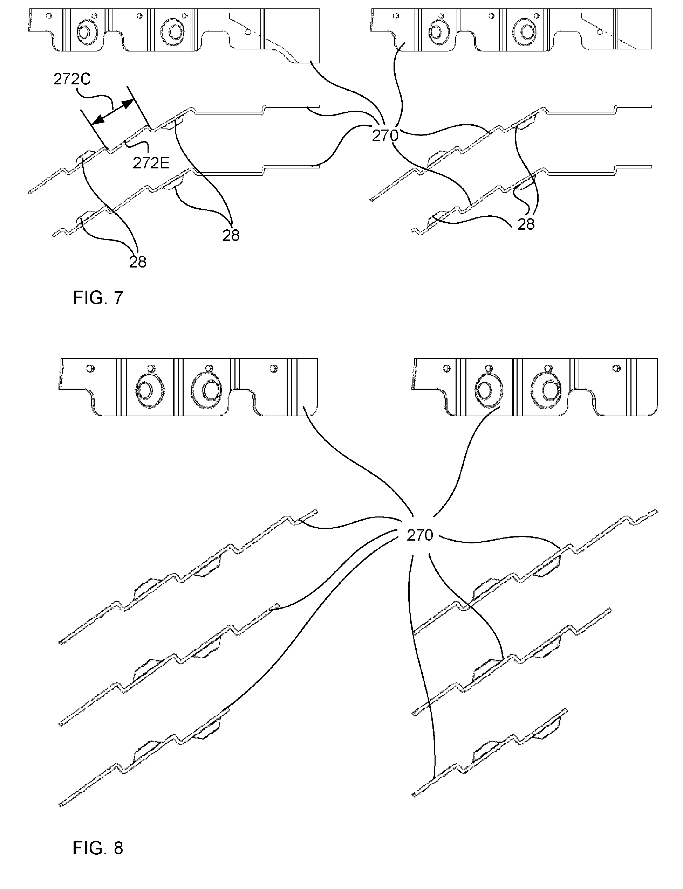

Figure 7 illustrates lamella plates 270 according to preferred embodiments as viewed from the side and from the top. In these embodiments, there are illustrated possible configurations for the shape of the lamella plate, for example for the edge regions of a vehicle tire, as has already been described above in connection with Figure 3 and Figure 4. In embodiments according to Figure 7, the transfer zone 272C is also provided with an extension in parallel with the lengthwise direction of the lamella plate 270, and respectively in the tire in parallel with the lengthwise direction of the sipe 27 (illustrated by a double-headed arrow in the center lefthand side of Figure 7), in which case the transfer zone 272C comprises the intermediate zone 272E that does not include a locking element. Now the transfer zone 272C can be configured in the same fashion as the main surfaces, or it can be for example a straight, slightly curved or flattish element or the like, by means of which the locking elements 28 are spaced apart wider than in the embodiment illustrated in Figures 5A-5C. Thus the locking features of said lamella plate, and consequently also the pneumatic features of the tread block, can be adjusted. Likewise, Figure 7 illustrates how the lamella plate can be provided with various other shapes in the end region thereof, for example with respect to said edge regions of the tread block.

Figure 8 respectively illustrates, viewed from the side and from the top, selected embodiments of lamella plates with various different shapes that are fitted for example for the edge regions of tread blocks. These embodiments illustrate how the lamella plate is extended as a regular lamella plate after the points provided with locking elements (outside). In Figure 8, the locking elements are similar to the ones already described in connection with Figures 3 and 4, as well as with Figures 5A - 5C.

As can be understood in connection with Figures 7 and 8, the lamella plates illustrated in these drawings create in a vehicle tire or in a tread band a geometry, i.e. a sipe, with a corresponding negative volume. Therefore in connection with said drawings we have not explained all corresponding features as were explained in connection with Figures 5A, 5B and 5C.

As is obvious for a person skilled in the art, the invention and its embodiments are not restricted to the above described exemplary embodiments. The expressions included in the claims and describing certain characteristic features, for example "the tire includes a tread layer", are open so that the statement of characteristic features does not exclude the existence of such other characteristic features that are not specified in the independent or dependent claims.

### Reference numbers used in the drawings:

- 1: vehicle tire
- 2: tread layer
- 20: tread pattern
- 22: tread block
- 221: lamella
- 25: circumferential groove
- 26: transversal groove
- H: groove depth / tread block height
- 27: sipe
- 270: lamella plate
- L: sipe length / lamella plate width
- h: sipe depth / lamella height
- s: sipe width / lamella plate thickness
- 271: sipe wall
- 272A: main surface
- 272B: main surface
- 272C: transfer zone
- C: distance between main surfaces
- 272D: center surface
- 272E: intermediate zone
- 28: locking element
- 281: bracket
- 282: recess
- d: cone tip diameter
- D: cone base diameter
- F: shearing force
- P: ground surface

## Claims

1. A vehicle tire (1) including a tread layer (2) that is meant for a rolling contact against a ground surface, said tread layer (2) being provided with a tread pattern (20) comprising circumferential (25) and transversal grooves (26), in between of which grooves (25) there are formed tread blocks (22) provided with sipes (27), wherein at least part of the sipes (27) is made to be undulating in the lengthwise direction of the sipe (27), so that in the sipe (27), there are sequentially formed at least two main surfaces (272A, 272B) spaced apart by a distance (C), and in between said surfaces there is arranged a transfer zone (272C), so that adjacent main surfaces (272A, 272B) are provided with locking elements (28) which in the other wall (271) of the sipe (27) are formed as a rotation symmetrical frusto-conical bracket (281), and in the other wall (271) of the sipe as a rotation symmetrical frusto-conical recess (282), and that said bracket (281) and recess (282) are matched together, when the sipe walls (271) are pressed together in a usage situation,
**characterized in that**
the depth (h) of the sipe (27) is not constant along the whole length and is largest at the main planes (272A, 272B).

2. A vehicle tire according to claim 1, **characterized in that** the locking elements (28) are on adjacent main surfaces (272A, 272B) placed in mutually opposite directions, and they are formed on the main plane surface (272A, 272B) so that they are directed away from the center surface (272D) of the sipe (27).

3. A vehicle tire according to claim 1, **characterized in that** the distance between the main surfaces (272A, 272B) is 1-5 mm.

4. A vehicle tire according to claim 1, **characterized in that** in the transfer zone (272C), there is arranged a longitudinal extension, so that the transfer zone (272C) includes an intermediate zone (272E) without locking elements.

5. A vehicle tire according to claim 1, **characterized in that** said locking elements (28) are arranged in the direction of the width of the vehicle tire, in outer rows formed by tread blocks (22) and defined by a circumferential groove (25).

6. A vehicle tire according to claim 1, **characterized in that** the base diameter (D) of the truncated cone forming the recess (281) is 3 - 7 mm, and the tip diameter (d) is 1 - 7 mm, however so that the tip diameter (d) is at least 10% smaller than the base diameter (D).

7. A tread band (10) for treading a vehicle tire (1), said tread band including a tread layer (2) that is meant for a rolling contact against a ground surface, which tread layer (2) is provided with a tread pattern (20) comprising circumferential and transversal grooves (25), in between of which grooves (25) there are formed tread blocks (22) provided with sipes (27), wherein at least part of the sipes (27) is made to be undulating in the lengthwise direction of the sipe (27), so that in the sipe (27), there are sequentially formed at least two main surfaces (272A, 272B) spaced apart by a distance (C), and in between said surfaces there is arranged a transfer zone (272C), and that in adjacent main surfaces (272A, 272B), there are formed locking elements (28), which in the other wall (271) of the sipe (27) are made as a rotation symmetrical frusto-conical bracket (281) and in the other wall (271) as a rotation symmetrical frusto-conical recess (282), and that said bracket (281) and recess (282) are matched together, when the sipe walls (271) are pressed together in a usage situation,
**characterized in that**
the depth (h) of the sipe (27) is not constant along the whole length and is largest at the main planes (272A, 272B).

8. A lamella plate (270) used in the manufacturing process of a vehicle tire according to claim 1, by means of which plate, a sipe (27) is formed in the tread block (22), wherein the lamella plate (270) is formed to be undulating in the lengthwise direction of the lamella plate (270), so that in the lamella plate (270), there are sequentially formed at least two main surfaces (272A, 272B) spaced apart by a distance (C), and in between said surfaces there is arranged a transfer zone (272C), so that in adjacent main surfaces (272A, 272B), there are formed locking elements (28), which form in the other wall (271) of a corresponding sipe (27) to be created a rotation symmetrical frusto-conical bracket (281), and in the other wall (271) a rotation symmetrical frusto-conical recess (282), and that said bracket (281) and recess (282) are matched together, when the sipe walls (271) are pressed together in a usage situation,
**characterized in that**
the lamella plate (270) is configured to form a sipe (27) of which depth (h) is not constant along the whole length and is largest at the main planes (272A, 272B).

## Patentansprüche

1. Fahrzeugreifen (1), umfassend eine Laufflächenschicht (2), die für einen Rollkontakt mit einer Bodenfläche gedacht ist, wobei die Laufflächenschicht (2) mit einem Laufflächenprofil (20) versehen ist, das umfängliche (25) und quer ausgerichtete Nuten (26) aufweist, wobei zwischen den Nuten (25) mit Lamellen (27) versehene Laufflächenblöcke (22) ausgebildet sind, wobei zumindest ein Teil der Lamellen (27) so ausgerichtet ist, dass sie in Längsrichtung der Lamelle (27) wellenförmig sind, so dass in der Lamelle (27) mindestens zwei Hauptflächen (272A, 272B) sequentiell ausgebildet sind, die um einen Abstand (C) voneinander beabstandet sind, und dass zwischen den Oberflächen eine Übergangszone (272C) angeordnet ist, so dass angrenzende Hauptflächen (272A, 272B) mit Sperrelementen (28) versehen sind, die in der anderen Wand (271) der Lamelle (27) als eine drehsymmetrische kegelstumpfartige Klammer (281) und in der anderen Wand (271) der Lamelle als eine drehsymmetrische kegelstumpfartige Ausnehmung (282) ausgebildet sind, und dass die Klammer (281) und die Ausnehmung (282) zusammengepasst werden, wenn die Lamellenwände (271) in einer Gebrauchssituation zusammengepresst werden,
**dadurch gekennzeichnet, dass**
die Tiefe (h) der Lamelle (27) nicht über die gesamte Länge konstant ist und an den Hauptebenen (272A, 272B) am größten ist.

2. Fahrzeugreifen nach Anspruch 1, **dadurch gekennzeichnet, dass** die Sperrelemente (28) auf angrenzenden Hauptflächen (272A, 272B) in zueinander entgegengesetzten Richtungen angeordnet sind und dass sie auf der Hauptfläche (272A, 272B) der Ebene so ausgebildet sind, dass sie von der Mittelfläche (272D) der Lamelle (27) weg ausgerichtet sind.

3. Fahrzeugreifen nach Anspruch 1, **dadurch gekennzeichnet, dass** der Abstand zwischen den Hauptflächen (272A, 272B) 1 bis 5 mm beträgt.

4. Fahrzeugreifen nach Anspruch 1, **dadurch gekennzeichnet, dass** in der Übergangszone (272C) eine Längserstreckung angeordnet ist, so dass die Übergangszone (272C) eine Zwischenzone (272E) ohne Sperrelemente umfasst.

5. Fahrzeugreifen nach Anspruch 1, **dadurch gekennzeichnet, dass** die Sperrelemente (28) in der Breitenrichtung des Fahrzeugreifens in von Laufflächenblöcken (22) gebildeten und durch eine Umfangsnut (25) definierten äußeren Reihen angeordnet sind.

6. Fahrzeugreifen nach Anspruch 1, **dadurch gekennzeichnet, dass** der Grunddurchmesser (D) des Kegelstumpfes, der die Ausnehmung (281) bildet, 3 bis 7 mm beträgt und der Spitzendurchmesser (d) 1 bis 7 mm beträgt, jedoch derart, dass der Spitzendurchmesser (d) mindestens um 10 % kleiner als der Grunddurchmesser (D) ist.

7. Laufflächenband (10) zum Profilieren eines Fahrzeugreifens (1), wobei das Laufflächenband eine Laufflächenschicht (1) umfasst, die für einen Rollkontakt mit einer Bodenfläche gedacht ist, wobei die Laufflächenschicht (2) mit einem Laufflächenprofil (2) versehen ist, das umfängliche und quer ausgerichtete Nuten (25) aufweist, wobei zwischen den Nuten (25) mit Lamellen (27) versehene Laufflächenblöcke (22) ausgebildet sind, wobei zumindest ein Teil der Lamellen (27) so ausgerichtet ist, dass sie in Längsrichtung der Lamelle (27) wellenförmig sind, so dass in der Lamelle (27) mindestens zwei Hauptflächen (272A, 272B) sequentiell ausgebildet sind, die um einen Abstand (C) voneinander beabstandet sind, und dass zwischen den Oberflächen eine Übergangszone (272C) angeordnet ist, und dass in angrenzenden Hauptflächen (272A, 272B) Sperrelemente (28) ausgebildet sind, die in der anderen Wand (271) der Lamelle (27) als eine drehsymmetrische kegelstumpfartige Klammer (281) und in der anderen Wand (271) der Lamelle als eine drehsymmetrische kegelstumpfartige Ausnehmung (282) ausgebildet sind, und dass die Klammer (281) und die Ausnehmung (282) zusammengepasst werden, wenn die Lamellenwände (271) in einer Gebrauchssituation zusammengepresst werden,
**dadurch gekennzeichnet, dass**
die Tiefe (h) der Lamelle (27) über die gesamte Länge nicht konstant ist und an den Hauptebenen (272A, 272B) am größten ist.

8. Lamellenplatte (270), die beim Herstellungsverfahren für einen Fahrzeugreifen nach Anspruch 1 verwendet wird, durch welche Platte eine Lamelle (27) in dem Laufflächenblock (22) gebildet wird, wobei die Lamellenplatte (270) so ausgebildet ist, dass sie in der Längsrichtung der Lamellenplatte (270) wellenförmig ist, so dass in der Lamellenplatte (270) sequentiell mindestens zwei Hauptflächen (272A, 272B) ausgebildet sind, die um einen Abstand (C) voneinander beabstandet sind, und zwischen den Oberflächen eine Übergangszone (272C) angeordnet ist, so dass in angrenzenden Hauptflächen (272A, 272B) Sperrelemente (28) ausgebildet sind, die in der anderen Wand (271) einer entsprechenden zu erzeugenden Lamelle (27) eine drehsymmetrische kegelstumpfartige Klammer (281) und in der anderen Wand (271) eine drehsymmetrische kegelstumpfartige Ausnehmung (282) ausbilden, und dass die Klammer (281) und die Ausnehmung (282) zusammengepasst werden, wenn die Lamellenwände (271) in einer Gebrauchssituation zusammengepresst werden,
**dadurch gekennzeichnet, dass**
die Lamellenplatte (270) dafür ausgelegt ist, eine Lamelle (27) auszubilden, deren Tiefe (h) nicht über die gesamte Länge konstant ist und an den Hauptebenen (272A, 272B) am größten ist.

## Revendications

1. Pneumatique (1) pour véhicule incluant une couche (2) de bande de roulement qui est prévue pour un contact en roulement contre une surface de sol, ladite couche (2) de bande de roulement étant dotée d'un motif (20) de bande de roulement comprenant des rainures circonférentielles (25) et transversales (26), entre lesquelles rainures (25) sont formés des pavés (22) dotés de lamelles (27), dans lequel au moins une partie des lamelles (27) est constituée de façon ondulée dans le sens de la longueur de la lamelle (27), de sorte que dans la lamelle (27), sont séquentiellement formées au moins deux surfaces principales (272A, 272B) espacées d'une distance (C), et entre lesdites surfaces est agencée une zone de transfert (272C), de telle sorte que des surfaces principales (272A, 272B) adjacentes sont dotées d'éléments de verrouillage (28) qui dans l'autre paroi (271) de la lamelle (27) sont formés comme une griffe (281) frustoconique symétrique en rotation, et dans l'autre paroi (271) de la lamelle comme un évidement (282) frustoconique symétrique en rotation, et que ladite griffe (281) et ledit évidement (282) correspondent l'un à l'autre, lorsque les parois (271) de lamelle sont pressées ensemble dans une situation d'usage,
**caractérisé en ce que**
la profondeur (h) de la lamelle (27) n'est pas constante sur la totalité de la longueur et est la plus grande au niveau des plans principaux (272A, 272B).

2. Pneumatique pour véhicule selon la revendication 1, **caractérisé en ce que** les éléments de verrouillage (28) sont sur des surfaces principales (272A, 272B) adjacentes placées dans des sens mutuellement opposés, et ils sont formés sur la surface principale (272A, 272B) de plan de telle sorte qu'ils sont dirigés à l'écart de la surface centrale (272D) de la lamelle (27).

3. Pneumatique pour véhicule selon la revendication 1, **caractérisé en ce que** la distance entre les surfaces principales (272A, 272B) est 1 à 5 mm.

4. Pneumatique pour véhicule selon la revendication 1, **caractérisé en ce que**, dans la zone de transfert (272C), est agencée une extension longitudinale, de telle sorte que la zone de transfert (272C) inclut une zone intermédiaire (272E) sans éléments de verrouillage.

5. Pneumatique pour véhicule selon la revendication 1, **caractérisé en ce que** lesdits éléments de verrouillage (28) sont agencés dans le sens de la largeur du pneumatique pour véhicule, en rangées extérieures formées par des pavés (22) et définies par une rainure circonférentielle (25).

6. Pneumatique pour véhicule selon la revendication 1, **caractérisé en ce que** le diamètre (D) de base du cône tronqué formant l'évidement (281) est de 3 à 7 mm, et le diamètre (d) de pointe est de 1 à 7 mm, cependant de telle sorte que le diamètre (d) de pointe est au moins 10% plus petit que le diamètre (D) de base.

7. Bande de roulement (10) pour bander un pneumatique (1) pour véhicule, ladite bande de roulement incluant une couche (2) de bande de roulement qui est prévue pour un contact en roulement contre une surface de sol, laquelle couche (2) de bande de roulement est dotée d'un motif (20) de bande de roulement comprenant des rainures circonférentielles et transversales (25), entre lesquelles rainures (25) sont formés des pavés (22) dotés de lamelles (27), dans laquelle au moins une partie des lamelles (27) est constituée de façon ondulée dans le sens de la longueur de la lamelle (27), de sorte que dans la lamelle (27), sont séquentiellement formées au moins deux surfaces principales (272A, 272B) espacées d'une distance (C), et entre lesdites surfaces est agencée une zone de transfert (272C), et que dans des surfaces principales (272A, 272B) adjacentes sont formés des éléments de verrouillage (28), qui dans l'autre paroi (271) de la lamelle (27) sont formés comme une griffe (281) frustoconique symétrique en rotation, et dans l'autre paroi (271) comme un évidement (282) frustoconique symétrique en rotation, et que ladite griffe (281) et ledit évidement (282) correspondent l'un à l'autre, lorsque les parois (271) de lamelle sont pressées ensemble dans une situation d'usage,
**caractérisée en ce que**
la profondeur (h) de la lamelle (27) n'est pas constante sur la totalité de la longueur et est la plus grande au niveau des plans principaux (272A, 272B).

8. Plaque lamellaire (270) utilisée dans le procédé de fabrication d'un pneumatique pour véhicule selon la revendication 1, au moyen de laquelle plaque une lamelle (27) est formée dans le pavé (22), dans laquelle la plaque lamellaire (270) est formée de façon à onduler dans le sens de la longueur de la plaque lamellaire (270), de sorte que, dans la plaque lamellaire (270), sont séquentiellement formées au moins deux surfaces principales (272A, 272B) espacées d'une distance (C), et entre lesdites surfaces est agencée une zone de transfert (272C), de sorte que dans des surfaces principales (272A, 272B) adjacentes sont formés des éléments de verrouillage (28), qui forment dans l'autre paroi (271) d'une lamelle (27) correspondante devant être créée une griffe (281) frustoconique symétrique en rotation, et dans l'autre paroi (271) un évidement (282) frustoconique symétrique en rotation, et que ladite griffe (281) et ledit évidement (282) correspondent l'un à l'autre, lorsque les parois (271) de lamelle sont pressées ensemble dans une situation d'usage,
**caractérisée en ce que**
la plaque lamellaire (270) est configurée pour former une lamelle (27) dont une profondeur (h) n'est pas constante sur la totalité de la longueur et est la plus grande au niveau des plans principaux (272A, 272B).
